Europäisches Patentamt

European Patent Office

Office européen des brevets

(19)

(11) Numéro de publication : **0 507 685 A1**

(12) # DEMANDE DE BREVET EUROPEEN

(21) Numéro de dépôt : **92400923.6**

(22) Date de dépôt : **02.04.92**

(51) Int. Cl.⁵ : **G06F 15/16,** G06F 12/02

(30) Priorité : **03.04.91 FR 9104024**

(43) Date de publication de la demande :
**07.10.92 Bulletin 92/41**

(84) Etats contractants désignés :
**DE GB**

(71) Demandeur : **THOMSON-CSF**
**51, Esplanade du Général de Gaulle**
**F-92800 Puteaux (FR)**

(72) Inventeur : **Demeure, Alain**
**THOMSON-CSF, SCPI, Cédex 67**
**F-92045 Paris la Défense (FR)**

Inventeur : **Pinti, Robert**
**THOMSON-CSF, SCPI, Cédex 67**
**F-92045 Paris la Défense (FR)**
Inventeur : **Monchant, Michel**
**THOMSON-CSF, SCPI, Cédex 67**
**F-92045 Paris la Défense (FR)**
Inventeur : **Sanches, José Joaquim**
**THOMSON-CSF, SCPI, Cédex 67**
**F-92045 Paris la Défense (FR)**
Inventeur : **Taton, Daniel**
**THOMSON-CSF, SCPI, Cédex 67**
**F-92045 Paris la Défense (FR)**
Inventeur : **Castagne, Pascal**
**THOMSON-CSF, SCPI, Cédex 67**
**F-92045 Paris la Défense (FR)**

(74) Mandataire : **Desperrier, Jean-Louis et al**
**THOMSON-CSF SCPI**
**F-92045 PARIS LA DEFENSE CEDEX 67 (FR)**

(54) **Procédé de couplage en anneau pour opérateur informatique.**

(57) L'invention concerne les procédés qui permettent d'augmenter la vitesse de transfert entre des cartes opérateurs d'un système informatique, reliées par ailleurs par un bus du type VME, en les reliant par une liaison en anneau.

Elle consiste à définir un espace d'adressage global sur l'ensemble des mémoires (104) associées aux processeurs (103) reliés à l'anneau par des organes de couplage (105). Les données, ou les évènements systèmes, sont transférés d'un processeur à un autre sous la forme de paire de mots dont le premier est un mot d'adressage et le deuxième un mot de données ou d'évènements systèmes. Le mot d'adressage comprend une partie qui détermine une page contenue dans une ou plusieurs mémoires physiques, et une deuxième partie qui détermine l'adresse relative dans cette page. Un système de régulation (401-404) permet d'éviter qu'un processeur n'accapare toute la capacité de transmission.

Elle permet de construire un système informatique dans lequel le traitement est réparti sur un grand ensemble de processeurs, sans qu'il y ait de diminution de vitesse due au blocage lors du transfert des données entre ces processeurs.

FIG.1

EP 0 507 685 A1

La présente invention se rapporte aux procédés de couplage qui permettent de relier en anneau des opérateurs informatiques, de préférence identiques, disposés en général sur des cartes séparées physiquement. Elle s'applique plus particulièrement aux transferts à grande vitesse de données, notamment des tableaux de données, entre les cartes d'un ensemble de cartes logées dans un panier dont les connecteurs sont reliés par un bus, par exemple un bus du type VME.

Il est connu de construire des systèmes informatiques distribués formés d'opérateurs distincts, mais souvent totalement identiques, répartis sur des cartes elles-mêmes identiques comprenant par exemple chacune un opérateur. Ces cartes sont placées dans un panier au fond duquel des connecteurs permettent d'alimenter les cartes et de recevoir et émettre les signaux qui leur sont nécessaires. Souvent ces connecteurs sont réunis par un bus qui permet l'échange de données entre les cartes. La répartition des travaux à effectuer se fait par programmation et les cartes échangent des données par l'intermédiaire du bus, pour recevoir par exemple certaines données provenant d'un travail effectué sur une autre carte et émettre des données du même genre à destination d'une autre carte.

Il est très courant d'utiliser pour cela un bus connu sous le nom de VME, qui est normalisé de manière stricte aussi bien sur l'emplacement des contacts que sur les protocoles de transfert des données le long du bus.

Compte tenu de ce que la transmission sur le bus est asynchrone et que, s'agissant d'un bus, on ne peut avoir simultanément qu'un émetteur et un récepteur, le débit sur le bus est relativement lent, de l'ordre de un million de mots par seconde.

Il y a de nombreuses applications pour lesquelles un tel débit est tout à fait insuffisant. On citera par exemple les nombreux cas où les opérateurs font des opérations relativement simples mais en grande quantité telles que des combinaisons linéaires du genre de sommations de Xi x ki, où les Xi sont des données et les ki des coefficients ; coefficients et données étant rangés en tableaux dans des mémoires. Les opérations de ce genre sont par exemple utilisées pour construire des voies dans les sonars à partir des échantillons de signaux captés par les hydrophones des antennes. Ces opérations relativement simples doivent être recommencées un grand nombre de fois entre de nombreuses données et de nombreux coefficients qui sont répartis sur l'ensemble des opérateurs pour des raisons d'encombrement de mémoire. En outre, les résultats de ces calculs doivent être en permanence échangés entre les opérateurs dès qu'ils sont obtenus. Dans ces conditions la capacité d'échange du bus VME n'est pas suffisante, alors que par ailleurs ce bus est fort utile pour permettre aux opérateurs de travailler ensemble, en dehors de ces échanges de données, et aussi pour relier le système formé de tous ces opérateurs aux autres dispositifs extérieurs, ceux qui par exemple fournissent les données et recueillent les résultats finaux des calculs.

Ces dispositifs extérieurs sont eux-mêmes étudiés par d'autres équipes que celle qui étudient l'ensemble des opérateurs et ces équipes appartiennent parfois à des fournisseurs extérieurs. Il est donc beaucoup plus simple pour standardiser les échanges entre tous les dispositifs composant par exemple un sonar, d'utiliser un bus VME dont les limitations en débit ne sont pas gênantes dans ce cas et n'apportent des inconvénients qu'à l'intérieur du système de traitement formé d'opérateurs de calcul.

On sait enfin que le bus VME comporte en dehors des points de connexion réservés par le standard un certain nombre de point de connexion libres destinés à permettre aux utilisateurs des utilisations spécifiques pour les liaisons qui leur conviennent.

Pour surmonter les limitations de vitesse dues au bus VME dans les échanges entre opérateurs, l'invention propose un procédé de couplage en anneau pour opérateur informatique, dans lequel chaque opérateur est relié à une mémoire qui lui est propre et un circuit de couplage inséré en coupure dans un anneau, principalement caractérisé en ce que chaque circuit de couplage émet successivement sur l'anneau un premier mot d'adressage et un deuxième mot de données dont la destination est donnée par le premier mot ; l'espace d'adressage comportant la totalité des adresses des mémoires associée aux opérateurs et le mot d'adressage comprenant un premier ensemble de bits déterminant une page située dans au moins une mémoire et un deuxième ensemble de bits déterminant une adresse relative dans cette page.

D'autres particularités et avantages de l'invention apparaîtront clairement dans la description suivante faite à titre d'exemple non limitatif en regard des figures annexées qui représentent :
- la figure 1, le schéma d'ensemble d'un système utilisant l'invention ;
- la figure 2, la structure d'un mot d'adresse selon l'invention ;
- la figure 3, un schéma partiel du circuit 105 de la figure 1 ;
- la figure 4, un schéma drune autre partie du circuit 105 ; et
- la figure 5, une table de priorité utilisée dans le circuit de la figure 4.

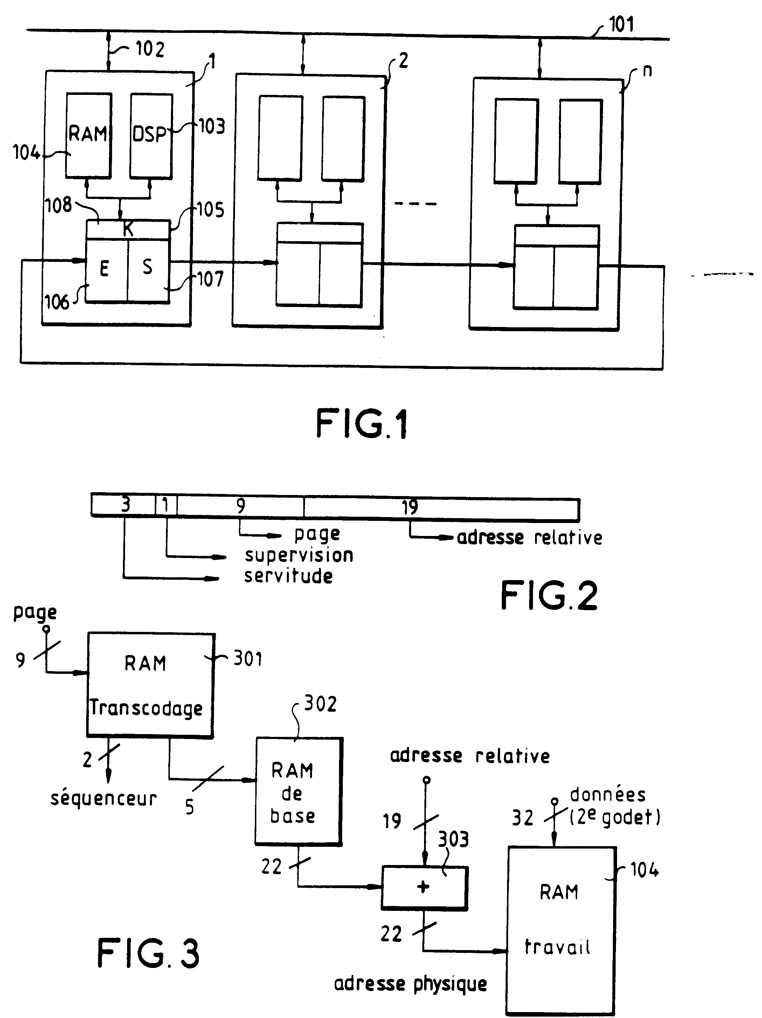

Dans le système représenté sur la figure 1, un ensemble de cartes opérateurs 1, 2... n sont reliées entre elles par l'intermédiaire d'un bus 101, de type VME par exemple, auquel elles sont rattachées par des connexions 102. Ces connexions et celles dont on parlera après sont multifilaires pour transmettre en parallèle des mots de m bits, par exemple 32, mais elles sont simplement représentées par un trait sur la figure pour faciliter la lecture du dessin.

Chaque carte comprend par exemple un processeur DSP 103, du type microprocesseur par exemple, relié à une mémoire du type RAM 104 qui sert à contenir les données nécessaires au fonctionnement du processeur ainsi que les données utiles pour les calculs qui sont effectués.

La carte comprend en outre un circuit selon l'invention, appelé de manière conventionnel et mnémotechnique "carrousel". Ce circuit carrousel 105 est relié au processeur 103 et à la mémoire 104 par des bus internes classiques aux systèmes à microprocesseur, et par des commandes d'interruptions, elles aussi classiques.

Le carrousel comprend un registre d'entrée E 106 et un registre de sortie S 107. Ces registres sont reliés à des circuits logiques de commande K 108 qui permettent de les remplir et de les vider conformément à une programmation qui est faite par le processeur 103.

Ainsi donc on peut simultanément vider le registre 107 sur l'anneau pendant qu'on remplit le registre 106 à partir de cet anneau.

Le câblage entre les carrousels des différentes cartes s'effectue par l'intermédiaire des connexions libres du bus VME 101. On relie le registre de sortie d'un carrousel au registre d'entrée du carrousel d'une autre carte, et ainsi de suite, de façon à former un circuit en boucle, ou anneau, comme représenté sur la figure dans le cas simple où il y a transfert direct d'une carte à la suivante. Comme ceci oblige à repartir de la dernière carte pour revenir sur la première, en particularisant ainsi une seule liaison qui est de surcroît relativement longue, dans la pratique on s'arrange pour avoir un câblage entrelacé qui permet d'éviter des liaisons trop longues et d'obtenir sensiblement une symétrie complète, sauf légèrement aux extrémités.

On constate donc que sur un anneau ainsi réalisé on peut avoir simultanément une émission sur toutes les cartes et une réception simultanée sur toutes les cartes. Dans ces conditions le nombre de cartes ne limite pas du tout la capacité globale de l'anneau dont le débit est en fait égal au débit unitaire d'une liaison entre 2 cartes, multiplié par le nombre de liaisons. Ceci permet d'échanger de grandes quantités de données entre les cartes, par exemple des tableaux très importants, sans limiter outre mesure le temps dévolu au traitement des données qui sont ainsi échangées.

Selon l'invention, le protocole d'échange entre les carrousels s'effectue sur deux coups d'horloge, ces coups étant différenciés de manière connue par la phase de l'horloge.

Au premier coup, on transfère un mot d'adresse, sur 32 bits en parallèle par exemple, et au coup d'horloge suivant, on transmet un mot de longueur identique correspondant aux données transférées entre le carrousel émetteur et le carrousel récepteur. Ces mots sont conventionnellement appelés " godets ". Le mot de données ne nécessite pas de commentaires particuliers, mais le mot d'adresse est structuré selon l'invention de manière à faciliter au maximum le transfert des données.

Cette structure du mot d'adresse est représentée dans le cas d'un mot de 32 bits sur la figure 2. On pourrait utiliser des mots de longueur plus grande, essentiellement pour augmenter les capacités d'adressage, tout en gardant une structure semblable. Toutefois ce nombre de 32 correspond à une longueur de mot couramment utilisée en fonction des capacités des processeurs existant et il prend place facilement sur les connexions libres du bus VME.

Les trois premiers bits sont des bits de servitude. Le quatrième bit est un bit dit superviseur. On expliquera plus loin l'utilité de ces bits.

Les 28 bits suivants sont divisés en un premier ensemble de 9 bits de page, appelé numéro de page, et un deuxième ensemble de 19 bits d'adresse relative. L'ensemble de ces 28 bits permet d'adresser chaque mot dans un espace d'adressage virtuel très grand permettant de configurer un système informatique distribué comportant un grand nombre de cartes munies de mémoires physiques de grande capacité. Cet espace d'adressage virtuel sera appelé conventionnellement référentiel global et est divisé par exemple en 512 pages.

Les 9 bits de numéro de page permettent de déterminer l'adresse d'une des mémoires 104 associées aux carrousels 103 auquel est destiné le godet de données qui suit le godet d'adressage. Les 19 bits d'adresse relative permettent de déterminer l'adresse physique à l'intérieur de la page ainsi déterminée. Ce système d'adressage permet ainsi de transférer les données dans n'importe quel ordre et aussi de réorganiser les tableaux pour faciliter le travail ultérieur qui sera effectué à partir de ceux-ci.

Ainsi donc, selon un schéma simplifié représenté sur la figure 3, à l'arrivée du premier godet d'adressage les 9 bits de page sont décodés dans une mémoire RAM de transcodage 301, formée par exemple de 512 mots de 7 bits. Ces 9 bits de page adressent l'un des mots de cette RAM, qui est lu. Les deux premiers bits de ce mot sont dirigés vers le séquenceur K du carrousel, afin de déterminer la suite à donner au transfert. Ces deux bits permettent de coder 4 cas :
   – prendre les données du godet suivant sans les retransmettre sur l'anneau ;
   – prendre ces mêmes données en les retransmettant ;
   – transmettre ces données sans les prendre ;
   – et, éventuellement, n'effectuer aucune action, le godet suivant étant vide.

Si le godet suivant est à prendre, les 5 autres bits lus dans la RAM 301 permettent de lire un mot de 22 bits dans une RAM de base 302 comportant par exemple 32 mots. Ces 22 bits permettent de désigner une segmentation dans la mémoire physique finale.

Cette mémoire a été décrite ici pour représenter le cas le plus général, dans lequel on peut, comme on va le voir, modifier complètement l'adresse des mots. On pourrait très bien utiliser directement les 5 bits provenant de la mémoire 301 pour désigner directement une page page 32, ou éventuellement procéder à un remaniement de ces pages par l'intermédiaire de la mémoire 302.

Dans l'exemple représenté, les 22 bits lus dans la mémoire 302 sont additionnés dans un additionneur 303 aux 19 mots d'adresse relative du godet. Cette opération permet d'obtenir un mot de 22 bits représentant une adresse physique qui permet d'adresser la mémoire RAM de travail 104, dans laquelle seront stockés les 32 bits de données provenant du godet suivant qui va arriver après le godet d'adressage. Si on n'avait que 5 bits disponibles, par exemple les cinq en sortie de la mémoire 301, il suffirait de les regrouper avec les 19 bits d'adresse relative pour obtenir les 22 bits d'adresse physique.

Comme on le voit, le numéro de page relie l'émetteur et le récepteur par l'intermédiaire du décodage dans la mémoire 301, puisque ce numéro de page indique tout à la fois si le godet de données suivant doit être mémorisé dans la mémoire associée au carrousel récepteur, et quel est alors le numéro de page à utiliser dans cette mémoire. La RAM 301 est chargée lors de l'utilisation générale de l'application à traiter dans l'ensemble du dispositif, et les numéros de pages sont déterminés par le processeur relié au carrousel expéditeur des godets selon le déroulement du traitement.

Si le carrousel est émetteur, le processeur 103 commande le séquenceur 105 pour émettre des successions de deux godets, le premier étant un godet d'adressage dont la structure est conforme à celle définie ci-dessus, et le deuxième un godet de données comprenant un mot de 32 bits lu dans la mémoire 104 à une adresse correspondant à la phase de traitement en cours et qui sera à transférer dans une mémoire située plus loin sur l'anneau. Si le carrousel n'est que retransmetteur, il réemet les deux godets successifs qu'il a reçus.

La description ci-dessus concerne le cas de transfert de données essentiellement organisées en tableaux, pour lequel l'invention est particulièrement utile.

Toutefois la structure d'adressage du premier godet permet de transférer aussi, non plus des données mais des évènements systèmes, tels que des évènements de synchronisation, par exemple pour prévenir de la transmission ultérieure d'un tableau ou de la fin de cette transmission.

Pour cela on utilise le bit dit superviseur décrit plus haut, qui permet de diviser en deux le référentiel global. Une valeur de ce bit, 0 par exemple, permet ainsi d'indiquer au séquenceur 105 que le godet suivant est un godet de données qui est transmis pour être rangé en mémoire. L'autre valeur, un par exemple, permet d'indiquer au système que le godet suivant n'est plus un godet de données mais un godet contenant une commande correspondant par un évènement système, ou à un évènement de synchronisation tel que par exemple l'indication de la fin de transmission d'un tableau. A la réception d'un tel bit deux cas peuvent se présenter :

Ou bien l'évènement n'est pas prévu, par exemple il correspond à un débordement nécessitant une interruption de transmission. Dans ce cas le séquenceur 105 génère une interruption qui est transmise au processeur 103. Celui-ci arrête le transfert et vient ranger la commande superviseur contenue dans le godet suivant dans une lucarne déterminée dans la RAM 104. L'adresse est gérée par un pointeur, ce qui permet de ne pas utiliser l'adresse relative. Cette lucarne est contenue dans une fenêtre qui a par exemple une dimension de 4 K mots.

Ou bien le passage en mode superviseur est prévu, par exemple quand on arrive à la fin de transmission d'un tableau dont les dimensions ont été transmises préalablement. Alors le séquenceur ne génère pas d'interruption, et dans ce cas il vient ranger la commande contenue dans le godet suivant dans la fenêtre décrite ci-dessus à une adresse déterminée par les bits les moins significatifs de l'adresse relative.

La topologie d'un anneau fait que la priorité de transmission est déterminée de manière implicite par la position des cartes sur le carrousel. En effet si la carte 1 par exemple veut transmettre à la carte n alors que la carte 2 est en train de transmettre aussi à la carte n, il y a blocage de cette transmission jusqu'à ce que la carte 1 libère le passage.

Pour éviter un tel blocage, l'invention a prévu un système de régulation. Celui-ci consiste à ne remplir, lors d'un transfert entre deux cartes, qu'une fraction N de la bande passante sur les segments d'anneau concernés. Cette fraction ést déterminée par le processeur 103 lorsqu'il paramètre le transfert d'un ensemble de données, un tableau par exemple. De ce fait les godets qui ne sont pas utilisés restent libres pour permettre la transmission entre d'autres cartes. Le rapport entre la taille du tableau à transmettre sur sa récurrence de transmission est grand. A la limite il peut être de 100%.

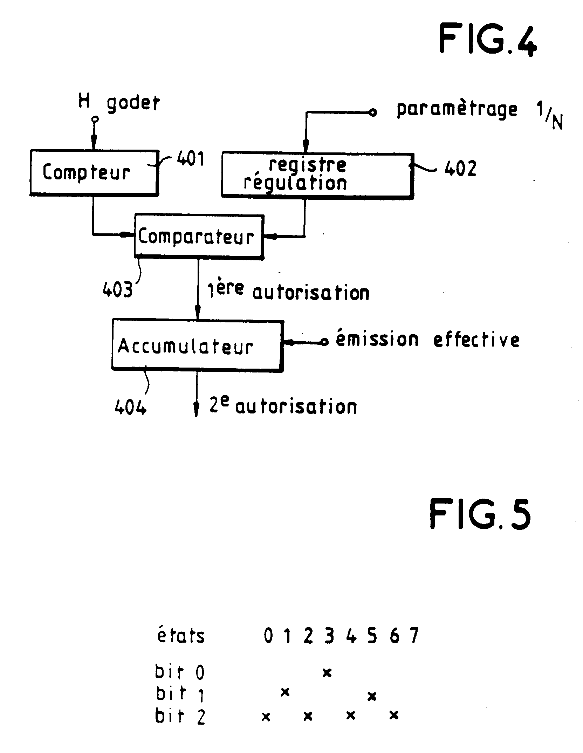

Le schéma synoptique du dispositif de régulation est représenté sur la figure 4. Un compteur 401 permet de compter une horloge H qui est au rythme des godets en entrée du carrousel. Le registre de régulation 402 est paramétré par le processeur 103 en N comme expliqué plus haut. Ce registre comporte donc autant d'étages que le compteur 401, et ces étages sont forcés de manière à obtenir la séquence voulue. Les séquences disponibles dans le cas de trois étages par exemple donnant 8 états sont représentées sur la figure 5. Le bit 0 à 1 avec les bits 1 et 2 à 0 indiquent par exemple que l'on peut émettre 1 godet sur 8, et les bits 0 et 1 à 0 avec le bit 2 à 1, que l'on peut émettre 4 godets sur 8, soit 1 godet sur 2.

Ce registre 402 correspond donc à une table de comparaison qui est introduite dans un comparateur 403 avec le contenu du compteur 401. Lorsque ces contenus correspondent, le comparateur délivre une première autorisation.

Cette première autorisation ne peut pas être utilisée telle quelle, puisque si l'on reçoit à ce moment un godet qui doit être retransmis, on ne peut pas transmettre un godet local provenant de la carte où se trouve le carrousel.

Pour tenir compte de cela, la première autorisation vient incrémenter un accumulateur 404, lequel reçoit sur une autre entrée des impulsions correspondant à chaque émission effective d'un godet local, qui viennent décrémenter l'accumulateur. Tant que le contenu de cet accumulateur n'est pas nul, il sort des deuxièmes autorisations qui permettent l'émission effective des godets locaux. Par contre dès que le contenu passe à 0 il ne permet plus cette autorisation.

Ainsi lorsque, partant d'une situation où l'accumateur est vide et qu'il n'y a pas de godet à retransmettre en entrée du carrousel, la première autorisation incrémente de 1 le contenu de l'accumateur. La deuxième autorisation est alors émise et autorise effectivement l'émission du godet local. Cette émission effective vient décrémenter le contenu de l'accumulateur qui repasse à 0 et empêche alors toute émission d'un godet local jusqu'à la réception de la première autorisation suivante. C'est le fonctionnement normal du système.

Par contre, lorsqu'un godet en entrée du carrousel est à réémettre, la deuxième autorisation est perdue et l'accumulateur reste donc incrémenté à 1. Lorsqu'arrive la deuxième première autorisation le compteur s'incrémente à 2, et ainsi de suite tant qu'il y a des godets à retransmettre en entrée qui empêchent toute émission d'un godet local, tout au moins (jusqu'à la limite du volume de l'accumulateur.

Dès qu'il n'y a plus de godet à retransmettre en entrée, la deuxième autorisation permet l'émission d'un godet local et l'accumulateur est alors décrémenté de 1. Comme il ne revient pas alors à 0, compte tenu des autorisations perdues auparavant, le godet interne suivant est immédiatement émis, ce qui décrémente l'accumulateur d'une unité supplémentaire, et ainsi de suite jusqu'à ce que le contenu de l'accumulateur soit revenu à 0, à moins qu'entre temps un autre godet à réémettre ne soit arrivé sur l'entrée du carrousel. On constate de cette manière que, plus on empêche le carrousel d'émettre des godets internes, plus il en émet à la suite les uns des autres dès qu'il en a l'occasion, alors que le registre de régulation 402 ne lui permettrait en temps normal de n'en émettre qu'une fraction N par unité de temps. On a donc bien un véritable système de régulation.

Enfin les trois premiers bits du premier godet sont des bits de servitude qui permettent de repérer d'éventuelles erreurs de transmission. L'un de ceux-ci est un bit de parité sur le premier godet, l'autre un bit de parité sur le deuxième godet et le troisième un bit dit "de tatouage". Ce bit de tatouage lorsqu'il est positionné sur une valeur, 1 par exemple, est repéré par le carrousel qui a émis le premier le godet, ce qui signifie que le godet a fait un tour complet sans être pris en charge, situation qui est a priori anormale. Dans ces conditions le carrousel qui détecte cette erreur peut émettre une interruption qui déclenche les procédures appropriées.

## Revendications

1. Procédé de couplage en anneau pour opérateur informatique, dans lequel chaque opérateur (103) est relié à une mémoire (104) qui lui est propre et un circuit de couplage (105) inséré en coupure dans un anneau (109), caractérisé en ce que chaque circuit de couplage émet (107) successivement sur l'anneau un premier mot d'adressage et un deuxième mot de données dont la destination est donnée par le premier mot ; l'espace d'adressage comportant la totalité des adresses des mémoires (104) associée aux opérateurs (103) et le mot d'adressage comprenant un premier ensemble de bits déterminant une page située dans au moins une mémoire et un deuxième ensemble de bits déterminant une adresse relative dans cette page.

2. Procédé selon la revendication 1, caractérisé en ce que le premier ensemble de bits permet en outre de déterminer (301) l'une des trois actions suivantes :
   – prise en compte du deuxième mot par le circuit de couplage ;
   – retransmission du deuxième mot par le circuit de couplage sans prise en compte ; et
   – prise en compte du deuxième mot et retransmission de celui-ci par le circuit de couplage.

3. Procédé selon l'une quelconque des revendications 1 et 2, caractérisé en ce que le premier mot comprend en outre un bit de supervision qui permet de déterminer si le deuxième mot est un mot de données ou un mot désignant un évènement système.

4. Procédé selon l'une quelconque des revendications 1 à 3, caractérisé en ce que le premier mot comprend en outre trois bits de servitude, l'un déterminant la parité du premier mot, un autre la parité du deuxième mot et le troisième permettant de déterminer une erreur lorsqu'un premier mot a fait un tour complet de l'anneau sans être pris en compte.

5. Procédé selon l'une quelconque des revendications 1 à 4, caractérisé en ce que, pour réguler (401-404) la transmission des mots sur l'anneau en évitant que toute la capacité de transfert soit prise par un seul module de couplage, on autorise celui-ci à n'émettre sur l'anneau que pendant une fraction de la bande passante de celui-ci.

6. Procédé selon la revendication 5, caractérisé en ce que l'on accumule (404) les autorisations d'émission lorsque l'émission est bloquée par la réception d'un mot à retransmettre et que l'on augmente le nombre d'autorisations d'émissions successives en fonction du nombre d'autorisations bloquées ainsi cumulées.

7. Procédé selon l'une quelconque des revendications 1 à 6, caractérisé en ce que l'on détermine l'adresse de page et la destination du mot reçu en effectuant un transcodage (301) sur le premier ensemble de bits du premier mot.

8. Procédé selon l'une quelconque des revendications 1 à 7, caractérisé en ce que l'on utilise pour les liaisons de l'anneau les connexions libres d'un bus VME.

# FIG.1

# FIG.2

page
supervision
servitude

page → adresse relative

# FIG.3

page

9

RAM
Transcodage 301

2
séquenceur

5

RAM
de
base 302

22

adresse relative

19 303

+

32 données (2e godet)

22

adresse physique

RAM
travail 104

## FIG.4

H godet

paramètrage $1/N$

Compteur — 401

registre
régulation — 402

Comparateur

403

1ère autorisation

Accumulateur — émission effective

404

$2^e$ autorisation

## FIG.5

| états | 0 1 2 3 4 5 6 7 |

| bit 0 |   |   |   | x |   |   |   |   |
| bit 1 |   |   | x |   |   | x |   |   |
| bit 2 |   | x |   | x |   | x |   | x |

**Office européen des brevets**

# RAPPORT DE RECHERCHE EUROPEENNE

Numero de la demande

EP    92 40 0923

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y<br>A | EP-A-0 177 429 (MATRA)<br><br>* page 2, ligne 30 - page 3, ligne 29 *<br>* page 6, ligne 32 - page 7, ligne 24 *<br>* page 9, ligne 3 - ligne 36 *<br>* figures 1-5 *<br>--- | 1<br>8 | G06F15/16<br>G06F12/02 |
| Y<br>A | WO-A-9 007 154 (FLASHPOINT COMPUTER CORPORATION)<br><br>* page 9, ligne 21 - page 10, ligne 25 *<br>* page 13, ligne 1 - page 15, ligne 12 *<br>* page 17, ligne 6 - page 18, ligne 20 *<br>* page 19, ligne 10 - page 21, ligne 16 *<br>* page 24, ligne 12 - page 26, ligne 10 *<br>* page 35, ligne 9 - ligne 24 *<br>* figures 2,3,5,8 *<br>--- | 1<br>8 | |
| A | IEEE INTERNATIONAL SYMPOSIUM ON CIRCUITS AND SYSTEMS PROCEEDINGS<br>vol . 1 of 3, 7-9 juin 1988, pages 815-818, New York, US; B. JEREN et al.: 'SPRINT: A signal processing ring network for high speed applications'<br>* page 815, colonne de droite, ligne 24 - ligne 34 *<br>* page 816, colonne de gauche, ligne 15 - ligne 47 *<br>* figure 1 *<br><br>----- | 1,8 | |

| | DOMAINES TECHNIQUES RECHERCHES (Int. Cl.5) |
|---|---|
| | G06F |

Le présent rapport a été établi pour toutes les revendications

| Lieu de la recherche | Date d'achèvement de la recherche | Examinateur |
|---|---|---|
| BERLIN | 09 JUILLET 1992 | MASCHE C. |

EPO FORM 1503 03.82 (P0402)